# EUROPEAN PATENT APPLICATION

(11) **EP 1 207 019 A2**
(43) Date of publication of application: **22.05.2002**
(21) Application number: 01127294.5
(22) Date of filing: 16.11.2001
(51) Int. Cl.: B25F 5/00

(54) **Device for supporting and feeding pneumatic or hydraulic tools with adjustable handle**

(30) Priority: 17.11.2000 IT BO000673
(71) Applicant: Campagnola S.R.L., 40069 Zola Predosa (Bologna) (IT)
(72) Inventor: Ferretti, Vittorio Pio, 40050 Monte S. Pietro (Bologna) (IT)
(74) Representative: Negrini, Elena

(57) **Abstract**

A device for supporting and feeding tools (40) with adjustable handle includes:
- a rod mean (2) along which a handle (3) slides;
- a telescopic duct (4) including a set of tubular means (10) and having ends, first (24) and second (25), respectively fixed in correspondence of an end portion (5) of the rod mean (2) and of the handle (3); said second end (25) of the telescopic duct (4) being in flow communication with junction means (16) for a supply pipe (6) of pressured fluid.

The rod mean (2) is fit for supporting the tool (40), which is in flow communication with the pipe (6) through the telescopic duct (4).

## Description

The present invention relates to devices for manually driving pneumatic or hydraulic tools remote from the operator.

The invention refers to a device for supporting and feeding tools with adjustable handle particularly of pneumatic or hydraulic type, for instance pneumatic shears, pneumatic combs for harvesting fruits, pneumatic wrenches or drill and hydraulic cleaning or sprinkling tools used in agriculture, mechanics, building, maintenance service, cleaning, disinfestation and similar.

There are known devices including a rod with fixed length having a fixed handle for supporting pneumatic or hydraulic tools.

The main drawback of these known devices consists in that it is not possible adjusting the distance between the handle and the tool, therefore said devices being uncomfortable and difficult to be used.

There are known supporting and feeding devices for pneumatic tools, including a telescopic rod with fixed handle and ducts inside the same rod.

The main drawback of these known devices consists in their complexity having high costs and weights.

A further drawback of the known devices having a telescopic rod consists in that every variation of the distance between the tool and the fixed handle requires the regulation of the telescopic rod length with long job stops, so causing a decrease of general efficiency of the working operations and therefore a cost increase.

Furthermore, there are known devices including a fixed length rod, having a sliding handle and at least two flexible spiral ducts external to the rod; one of the ducts connects the tool to the handle, being said tool fixed to an end of the rod, and the second one connects the handle to a compressed air supply.

The main drawback of these last known devices consists in that the two external ducts, connected to the handle, are bulky and create obstacle to the operator.

A further drawback consists in that the external duct interconnecting the handle and the tool is particularly subject to damages and breaking.

The main object of the present invention is to propose a device for supporting and feeding tools with adjustable handle light, ergonomic, having easy installation and fast regulation.

A further object of the present invention is to propose a safe and economic device allowing an efficient use.

Another object is to allow the user to control the tool activation by related means of the handle.

The objects above-mentioned are achieved according with the content of the claims.

The characteristics of the invention are underlined in the following with particular reference to the attached drawings, in which:

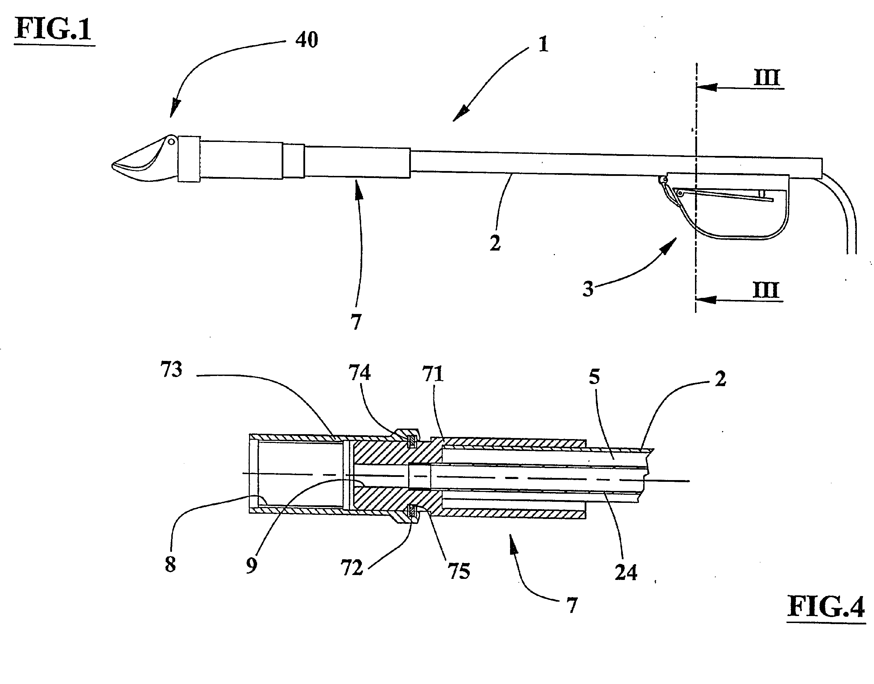

- figure 1 shows a side view of the device object of the present invention in a connection condition with a supply pipe of compressed air and with a cutting tool;
- figure 2 shows a partial enlarged longitudinal section view of the figure 1 device in a connection condition with a supply pipe of pressured fluid;
- figure 3 shows an enlarged section view according to plain III - III of the figure 1 device;
- figure 4 shows a partial enlarged longitudinal section view of a variant of the figure 2 device.

With reference to figures from 1 to 3, numeral 1 indicates the device object of the present invention, including a rod mean 2, a handle 3 and a telescopic duct 4.

The rod mean 2 substantially consists of an elongated shaped channel section, for instance made of synthetic material or alloy aluminum. The channel section has cross sections approximately "C" shaped, defining a longitudinal opening 20.

Fixing means 7 are connected to an end portion 5 of the rod mean 2. The fixing means include support means 8, having a nut screw for supporting a pneumatic or hydraulic tool 40. For instance, the tool 40 consists of harvesting combs for fruits operated by a pneumatic actuator, pneumatic shears or a liquid delivering mean or a brush rotated by the fluid flow. The nut screw of the support means 8 is fit for being coupled to a threaded cylindrical portion of the tool 40. The fixing means 7 also include connection means 9 for the flow communication of the nut screw of the support means 8 with the telescopic duct 4. In an assemblage condition of the device 1 to the tool 40, the connection means 9 are in flow communication with a feeding channel of the tool 40 for the pneumatic or hydraulic supply of this latter.

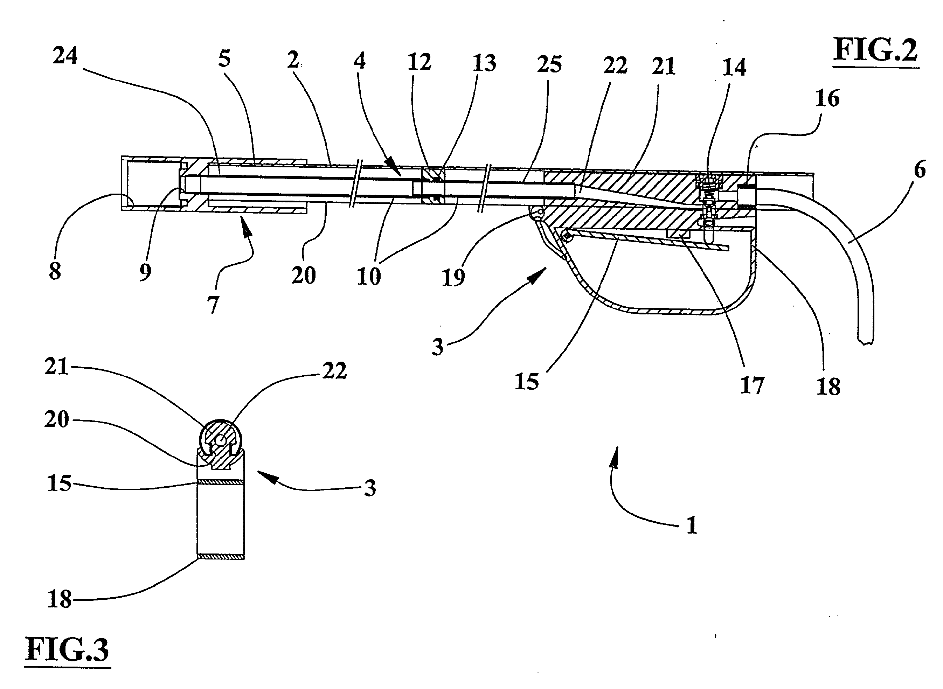

With particular reference to figure 3, the handle 3 has sliding means 21, which cross a portion of the opening 20 and slide inside the rod mean 2 to carry out a sliding fixing of the handle 3 to the rod 2. Second connection means 22, consisting of a'longitudinal through hole, are carried out in the sliding means 21. The second connection means 22 contain valve means 14 in order to regulate the compressed air or liquid flow, fit for feeding the tool 40.

The handle 3 includes lever means 15 for driving the valve means 14, and for avoiding the unintentional operation of the lever means 15, the handle 3 includes safety means 17. The handle 3 also includes a hilt 18 for the protection of the operator's hand.

The operator can stop the handle 3 in the desired position by virtue of blocking means 19 consisting, for instance, in a cam forced against the rod means by the rotation of a related lever. The end of the second connection means 22, opposed to the fixing means 7, has junction means 16. The junction means 16, for instance, consist of a removable connection of quick type fit to allow the fast connection and the removal of the device 1 from a connection pipe 6 to a compressed air or pressured liquid supply.

The remaining end of the second connection means 22 is connected to the end of the telescopic duct 4 opposed to the end connected to the first connection means 9 of the fixing means 7.

Then a pressured fluid supply feeds the tool 4 through a feeding conduit carried out by means of the pipe 6, the junction mean 16, the second connection means 22, the telescopic duct 4, the first connection means 9, in which the flow is regulated by the valve means 14 through the lever means 15.

The telescopic duct 4 is substantially made of a plurality of tubular means 10, for instance two. Each tubular mean 10 is connected to the following one by slipping means 12 fixed to a tubular mean 10 and having sealing means 13 for the airtight and waterproof slide of the other tubular mean 10.

The junction mean 16, the telescopic duct 4, the support means 8 and the first connection means 9 are almost aligned with axis of the rod mean 2. The telescopic duct 4 and the portion of the pipe 6 connected to junction mean 16 are therefore inside the rod means 2 protecting these latter.

The operation of the device 1 provides that, after the assemblage of the tool 40 and the pipe 6 to the device, the operator loosens the blocking means 19 to regulate the position of the handle 3 along the rod 2, fixing said position by tightening said blocking means.

The operation of the tool 40 is carried out by acting on the lever means 15 after unblocking these latter by operating the safety means 17. During the working operations, the operator adjusts, as needed, the position of the handle 3 acting on the blocking means 19, without moving considerably the tool 40 from its working position or to execute complex maneuvers.

The variant of figure 4 provides that the fixing means 7 are constituted by a sleeve mean 71 and a joining mean 73 reciprocally connected, with clearance, by a ring mean 72, for instance, consisting of a broken metallic ring with rectangular section and engaged into annular housings, first 74 and second 75 reciprocally facing and respectively carried out in the joining mean 73 and in the sleeve mean 71.

The ring mean 72, in correspondence of an uncoupled condition of the fixing means 7 to a tool 40, allows the axial rotation of the joining means 73 with respect to the sleeve mean 71, which is fixed to the end portion 5 of the rod mean 2 and has the first connection means 9. The joining mean 73 has the nut screw of the support means 8.

In correspondence of a coupled condition of the fixing means 7 to a tool 40, the portion of this latter, screwed in said nut screw, presses against the sleeve mean 71, creating frictions with this latter and further frictions between the ring mean 72 and the annular housings first 74 and second 75, in such way to stop the rotation of the joining mean 73.

The operation of this variant of the device 1 provides the fixing of the tool 40 to the fixing means 7, by rotating, by virtue of clearance, the joining mean 73 and said tool 40 to adjust the position of this latter with respect to the handle 3 in correspondence of the coupled condition in which such clearance is absent between said ring mean 72 and a wall of each annular housing, first 74 and second 75.

The main advantage of the present invention is to provide a supporting and feeding device with adjustable handle for tools, light, ergonomic, having an easy installation and fast regulation. A further advantage of the present invention is to provide a device free from risks for users and bystanders. Another advantage of the present invention is to provide a device allowing an efficient use with high efficiency permitting the user to control the tool activation through related means of the handle.

A further advantage is to allow the adjustment of the tool with respect to the handle, making easier the user's job. Another advantage is to provide a device easy to be manufactured and having an easy maintenance, low cost and of high reliability.

## Claims

1. Device for supporting and feeding tools (40) with adjustable handle **characterized in that** includes:
- a rod mean (2) along which a handle (3) slides;
- a telescopic duct (4) including a set of tubular means (10) and having the ends first (24) and second (25) respectively fixed in correspondence of an end portion (5) of the rod mean (2) and of the handle (3);
- junction means (16), for a supply pipe (6) of pressured fluid, which are in flow communication with the second end (25) of the telescopic duct (4);
said tool (40) being in flow communication with the supply pipe (6) through the telescopic duct (4).

2. Device according to claim 1 **characterized in that** the telescopic duct (4) is fixed to the rod means (2) through fixing means (7) having support means (8) for supporting the tool (40), this latter being in flow communication with the telescopic duct (4) through first connection means (9) of the fixing means (7).

3. Device according to any of the preceding claims **characterized in that** the handle (3) has second connection means (22) for the flow communication of the second end (25) of the telescopic duct (4) with the junction means (16).

4. Device according to any of the preceding claims **characterized in that** includes valve means (14), for regulating the pressured fluid flow, interposed between the junction means (16) and the end portion (5) of the rod mean (2).

5. Device according to claim 4 **characterized in that** the handle (3) includes lever means (15) for operating said valve means (14) and safety means (17) for blocking the lever means (15).

6. Device according to any of the preceding claims **characterized in that** the handle (3) includes a hilt (18).

7. Device according to any of the preceding claims **characterized in that** the handle (3) includes blocking means (19) of the sliding of said handle (3).

8. Device according to any of the preceding claims **characterized in that** the tubular means (10) are connected mutually through slipping means (12) having sealing means (13).

9. Device according to any of the preceding claims **characterized in that** the rod mean (2) substantially consists of a channel section having open cross section and approximately "C" shaped for the sliding support of sliding means (21) of the handle (3).

10. Device according to claims 3, 4 and 9 **characterized in that** the second connection means (22) are carried out in the sliding means (21) and contain the valve means (14).

11. Device according to any of the claims from 2 to 10 **characterized in that** the junction means (16), the telescopic duct (4), the support means (8) and the first connection means (9) are almost aligned with the axis of the rod mean (2).

12. Device according to any of the claims from 2 to 11 **characterized in that** the fixing means (7) substantially includes a sleeve mean (71) and a joining mean (73) having respective annular housing first (74) and second (75) mutually facing and engaged by a ring mean (72); the joining mean (73) having the support means (8) and the sleeve mean (71) being fixed to the end portion (5) of the rod mean (2).

13. Device according to claim 12 **characterized in that** between the joining mean (73) and the sleeve mean (71) and between these latter and the ring mean (72) there is clearance such to allow their mutual rotation in correspondence of an uncoupled condition of the tool (40) to the device (1) and such to allow the block of said mutual rotation in correspondence of a coupled condition of the tool (40) to the device (1).
